(19) Europäisches Patentamt
European Patent Office
Office européen des brevets

(11) **EP 2 705 666 B1**

(12) **FASCICULE DE BREVET EUROPEEN**

(45) Date de publication et mention
de la délivrance du brevet:
**19.02.2020 Bulletin 2020/08**

(51) Int Cl.:
*H04N 13/111* (2018.01)   *H04N 19/597* (2014.01)
*H04N 19/139* (2014.01)   *H04N 19/172* (2014.01)
*H04N 19/46* (2014.01)    *H04N 19/61* (2014.01)

(21) Numéro de dépôt: **12725061.1**

(22) Date de dépôt: **26.04.2012**

(86) Numéro de dépôt international:
**PCT/FR2012/050934**

(87) Numéro de publication internationale:
**WO 2012/150407 (08.11.2012 Gazette 2012/45)**

(54) **PROCÉDÉ DE CODAGE ET DE DÉCODAGE D'IMAGES INTÉGRALES, DISPOSITIF DE CODAGE ET DE DÉCODAGE D'IMAGES INTÉGRALES ET PROGRAMMES D'ORDINATEUR CORRESPONDANTS**

VERFAHREN ZUR CODIERUNG UND DECODIERUNG ZUSAMMENGESETZTE BILDER, VORRICHTUNG ZUR KODIERUNG UND DEKODIERUNG ZUSAMMENGESETZTE BILDER UND ENTSPRECHENDE COMPUTERPROGRAMME

METHOD FOR ENCODING AND DECODING INTEGRAL IMAGES, DEVICE FOR ENCODING AND DECODING INTEGRAL IMAGES, AND CORRESPONDING COMPUTER PROGRAMS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.05.2011 FR 1153852**

(43) Date de publication de la demande:
**12.03.2014 Bulletin 2014/11**

(73) Titulaire: **Orange**
**75015 Paris (FR)**

(72) Inventeurs:
• **SHI, Shasha**
**F-Cesson Sevigné 35510 (FR)**
• **GIOIA, Patrick**
**F-35530 Servon sur Vilaine (FR)**

(56) Documents cités:
**EP-A2- 2 306 742**

• **KANG H H ET AL: "Efficient compression of motion-compensated sub-images with KarhunenLoeve transform in three-dimensional integral imaging", OPTICS COMMUNICATIONS, NORTH-HOLLAND PUBLISHING CO. AMSTERDAM, NL, vol. 283, no. 6, 15 mars 2010 (2010-03-15) , pages 920-928, XP026868630, ISSN: 0030-4018 [extrait le 2009-12-01]**
• **Dick J., Almeida H., Soares L.D., Nunes P.: "3D Holoscopic video coding using MVC", EUROCON - International Conference on Computer as a Tool (EUROCON), 2011 IEEE , 27 avril 2011 (2011-04-27), pages 1-4, XP002653889, Lisbon ISBN: 978-1-4244-7486-8 Extrait de l'Internet: URL:http://ieeexplore.ieee.org/stamp/stamp .jsp ?tp=&arnumber=5929394 [extrait le 2011-07-27]**
• **OLSSON R: "Synthesis, Coding, and Evaluation of 3D Images Based on Integral Imaging", MID SWEDEN UNIVERSITY DOCTORAL THESIS, MITTUNIVERSITETET, SUNDSVALL, SWEDEN, no. Doctoral Thesis No.55, 1 janvier 2008 (2008-01-01), pages I-XXI,1, XP001562238, ISSN: 1652-893X**
• **OLSSON R ET AL: "Evaluation of a combined pre-processing and H.264-compression scheme for 3D integral images", VISUAL COMMUNICATIONS AND IMAGE PROCESSING; 30-1-2007 - 1-2-2007; SAN JOSE,, 30 janvier 2007 (2007-01-30), XP030081158,**

- **ANTHONY VETRO ET AL: "Towards a 3D Video Format for Auto-Stereoscopic Displays", APPLICATIONS OF DIGITAL IMAGE PROCESSING XXXI : 11 - 14 AUGUST 2008, SAN DIEGO, CALIFORNIA, USA; [PROCEEDINGS OF SPIE ; 7073], SPIE, BELLINGHAM, WASH , vol. 7073, no. TR2008-057 11 août 2008 (2008-08-11), pages 1-12, XP002603277, ISBN: 978-0-8194-7293-9 Extrait de l'Internet: URL:http://www.merl.com/reports/docs/TR200 8-057.pdf [extrait le 2008-09-01]**

- **YING CHEN ET AL: "The Emerging MVC Standard for 3D Video Services", EURASIP JOURNAL ON ADVANCES IN SIGNAL PROCESSING , vol. 2009 5 mars 2008 (2008-03-05), pages 786015-1, XP002634721, ISSN: 1687-6172, DOI: DOI:10.1155/2009/786015 Extrait de l'Internet: URL:http://www.hindawi.com/journals/asp/20 09/786015/abs/ [extrait le 2011-07-27]**

**Description**

Domaine de l'invention

La présente invention se rapporte de manière générale au domaine du traitement d'images, et plus précisément au codage et au décodage d'images intégrales et de séquences d'images intégrales.

L'invention peut notamment, mais non exclusivement, s'appliquer au codage vidéo mis en œuvre dans les codeurs vidéo actuels et de leurs amendements (MPEG, H.264, H.264 SVC, H.264 MVC, etc) ou à venir (ITU-T/VCEG (H.265) ou ISO/MPEG (HEVC)), et au décodage correspondant.

Art antérieur

L'imagerie intégrale est une technique consistant à représenter des images en relief. Elle est considérée comme particulièrement prometteuse dans le développement de la télévision 3D, notamment en raison du fait qu'elle propose, non pas une visualisation stéréoscopique des images, mais un parallaxe total.

Une image intégrale est classiquement composée d'un grand nombre d'images élémentaires qui représentent les différentes perspectives d'une scène en trois dimensions. La compression d'une image intégrale revient donc à compresser l'ensemble des images élémentaires.

Une méthode connue de compression d'images intégrales consiste à utiliser le format vidéo MPEG-4 AVC pour coder chacune des images élémentaires d'une image intégrale. Une telle méthode est relativement directe, puisqu'il suffit de traiter les images intégrales comme une séquence vidéo traditionnelle.

Un inconvénient d'une telle méthode réside dans le fait que la redondance spatiale et temporelle est réduite sans discernement. La forme bien particulière des images intégrales selon laquelle les images élémentaires sont susceptibles de présenter entre elles de nombreuses redondances spatiales et temporelles n'est dont pas exploitée de façon optimale.

Une méthode plus efficace pour compresser les images intégrales tout en restant dans le cadre du standard MPEG-4 AVC consiste à réorganiser les images élémentaires. Les redondances entres les images élémentaires sont ainsi exploitées, mais il reste beaucoup d'informations redondantes qui ne sont pas exploitées, en particulier la corrélation importante qui existe entre les images élémentaires d'une image intégrale courante et respectivement les images élémentaires correspondantes d'images intégrales adjacentes.

Une autre méthode connue consiste à coder les images intégrales à l'aide d'un algorithme de compression 3D-DCT tel que décrit dans le document R. Zaharia, A. Aggoun, M. McCormick, 'Adaptive 3D-DCT compression algorithm for continuous parallax 3D integral imaging', Signal Processing: Image Communication 17 (2002) 231-242. Une telle méthode est relativement proche des méthodes précitées basées sur le standard MPEG-4 AVC. En effet, la réorganisation des images élémentaires est identique. La différence entre cette autre méthode connue et les méthodes précitées réside dans la structure de codage des séquences d'images. Une telle méthode améliore certes la compression des images intégrales, mais ne permet pas la réduction des redondances caractéristiques des images intégrales.

Un autre document de l'art antérieur est cité ci-après: KANG H H ET AL: "Efficient compression of motion-compensated sub-images with KarhunenLoeve transform in three-dimensional integral imaging", OPTICS COMMUNICATIONS, NORTH-HOLLAND PUBLISHING CO. AMSTERDAM, NL, vol. 283, no. 6, 15 mars 2010 (2010-03-15), pages 920-928, XP026868630, ISSN: 0030-4018.

Objet et résumé de l'invention

L'invention est définie par les revendications. Un des buts de l'invention est de remédier à des inconvénients de l'état de la technique précité.

A cet effet, selon un premier aspect, la présente invention concerne un procédé de codage d'au moins une image intégrale (représentative d'au moins un objet en perspective dans une scène et comprenant une pluralité d'images élémentaires, un tel procédé mettant en œuvre une étape de génération d'une pluralité de K sous-images à partir de la pluralité d'images élémentaires.

Le procédé de codage selon l'invention est remarquable en ce qu'il met en œuvre les étapes de :

- agencement des sous-images selon un motif prédéterminé de façon à constituer une image multi-vues de l'objet, les vues correspondant respectivement aux sous-images ;
- compression adaptative de l'image multi-vues constituée, en fonction du type de déplacement de l'objet dans la scène.

Grâce à la réorganisation des sous-images qui sont ainsi disposées les unes par rapport aux autres selon un motif prédéterminé, une telle disposition permet ainsi d'exploiter de façon optimale les multiples redondances spatiales et temporelles entre les images élémentaires d'une image intégrale. Le codage des images intégrales est ainsi rendu plus efficace.

Une telle réorganisation des sous-images couplée à une compression adaptative de ces sous-images, permet en outre d'éviter d'inclure dans le signal à transmettre des informations de codage redondantes et donc inutiles à transmettre. Il en résulte ainsi une diminution non négligeable du coût de signalisation.

Selon un mode de réalisation particulier, l'étape de compression adaptative met en œuvre, pour une image multi-vues courante, les sous-étapes de :

- prédiction de chacune des K sous-images courantes de l'image multi-vues courante en fonction respectivement de K sous-images de référence d'une image multi-vues de référence précédemment codée puis décodée, délivrant des K sous-images prédites,
- détermination de données résiduelles, par comparaison de données relatives à chacune des K sous-images courantes et à respectivement chacune des K sous-images prédites,
- calcul de K vecteurs mouvement décrivant le mouvement entre les K sous-images courantes et respectivement les K sous-images de référence,
- calcul de la valeur de la profondeur dont s'est déplacé l'objet dans la scène, si le vecteur mouvement calculé relativement à la sous-image courante qui est située au centre de l'image multi-vues courante a une valeur nulle,

le procédé de codage selon l'invention mettant en outre en œuvre :

- la transmission d'un signal de données comprenant au moins les données résiduelles déterminées et la valeur de profondeur calculée, si le vecteur mouvement calculé relativement à la sous-image courante qui est située au centre de l'image multi-vues courante a une valeur nulle,
- la transmission d'un signal de données comprenant au moins les données résiduelles déterminées et la valeur de l'un des K vecteurs mouvement calculés, si les K vecteurs mouvement calculés ont des valeurs égales,
- la transmission d'un signal de données comprenant au moins les données résiduelles déterminées et les valeurs respectives des K vecteurs mouvement calculés, si au moins deux des K vecteurs mouvement calculés ont des valeurs différentes.

Une telle disposition permet de réduire sensiblement le coût de codage, en particulier dans les deux cas suivants :

- le cas où l'objet se déplace dans la scène uniquement selon une direction horizontale,
- le cas où l'objet se déplace dans la scène uniquement selon une direction verticale.

Selon un autre mode de réalisation particulier, le codage est de type MVC, dans le cas où au moins deux des K vecteurs mouvement calculés ont des valeurs différentes.

Une telle disposition permet de coder efficacement des images intégrales par exploitation des redondances spatiales et temporelles de ces dernières en appliquant à ces images la technique de codage standard MVC (abréviation anglaise de « Multi-view coding ») dévolue jusqu'à maintenant au codage d'images multivues.

Afin de coder encore plus efficacement de telles images intégrales, l'invention propose en variante une structure de codage MVC modifiée.

De façon correspondante, l'invention concerne un dispositif de codage d'au moins une image intégrale représentative d'au moins un objet en perspective dans une scène et comprenant une pluralité d'images élémentaires, un tel dispositif comprenant des moyens de génération d'une pluralité de K sous-images à partir de la pluralité d'images élémentaires.

Un tel dispositif de codage est remarquable en ce qu'il comprend :

- des moyens d'agencement des sous-images selon un motif prédéterminé de façon à constituer une image multi-vues de l'objet, les vues de l'image multivues correspondant respectivement aux sous-images ;
- des moyens de compression adaptative de l'image multi-vues constituée en fonction du type de déplacement de l'objet dans la scène.

Selon un mode de réalisation particulier, les moyens de compression adaptative comprennent, pour une image multi-vues courante :

- des sous-moyens de prédiction de chacune des K sous-images courantes de l'image multi-vues courante en fonction respectivement de K sous-images de référence d'une image multi-vues de référence précédemment codée puis décodée, délivrant des K sous-images prédites,
- des sous-moyens de détermination de données résiduelles, par comparaison de données relatives à chacune des K sous-images courantes et à respectivement chacune des K sous-images prédites,
- des sous-moyens de calcul de K vecteurs mouvement décrivant le mouvement entre les K sous-images courantes et respectivement les K sous-images de référence,
- des sous-moyens de transmission d'un signal de données comprenant au moins les données résiduelles déterminées, les sous-moyens de transmission transmettant en outre :

  • soit une valeur préalablement calculée de la profondeur dont s'est déplacé l'objet dans la scène, si le vecteur mouvement calculé relativement à la sous-image courante qui est située au centre de l'image multi-vues courante a une valeur nulle,
  • soit une valeur de l'un des K vecteurs mouvement calculés,
  • soit les valeurs respectives des K vecteurs mouvement calculés, si au moins deux des K vecteurs mouvement calculés ont des valeurs différentes.

Selon un autre mode de réalisation particulier, le codage effectué est de type MVC, dans le cas où au moins deux des K vecteurs mouvement calculés ont des valeurs différentes.

Selon un deuxième aspect, l'invention concerne un procédé de décodage d'un signal de données représentatif d'au moins une image intégrale qui a été précédemment codée, une telle image intégrale étant représentative d'au moins un objet en perspective dans une scène et comprenant une pluralité d'images élémentaires.

Un tel procédé est remarquable en ce qu'il met en œuvre les étapes de :

- décompression adaptative d'une image multi-vues courante précédemment codée, en fonction du type de déplacement de l'objet dans la scène, tel que contenu dans le signal de données,
- agencement selon un motif déterminé d'une pluralité de K sous-images courantes de l'image multi-vues courante, de façon à reconstruire l'image multi-vues de l'objet, les vues de l'image multi-vues correspondant respectivement aux sous-images,
- génération de la pluralité d'images élémentaires à partir de l'agencement des K sous-images, de façon à reconstruire l'image intégrale.

Selon un mode de réalisation particulier, l'étape de décompression adaptative met en œuvre, pour une image intégrale courante à reconstruire, les sous-étapes de :

- décodage de données résiduelles qui sont relatives à la pluralité de K sous-images de l'image multi-vues précédemment codée, les données résiduelles étant contenues dans le signal de données,
- si le signal de données contient une valeur de la profondeur dont s'est déplacé l'objet dans la scène ;

    • calcul d'un vecteur mouvement correspondant au déplacement,
    • prédiction, à l'aide des données résiduelles décodées et du vecteur mouvement calculé, de chacune des K sous-images courantes de l'image multi-vues courante en fonction respectivement de K sous-images de référence d'une image multi-vues de référence précédemment décodée, délivrant des K sous-images prédites,

- si le signal de données contient une seule valeur de vecteur mouvement calculée au codage, un tel vecteur décrivant le mouvement entre une des K sous-images à reconstruire et une des K sous-images de référence précédemment décodées, prédiction, à l'aide des données résiduelles décodées et du vecteur mouvement calculé, de chacune des K sous-images courantes de l'image multi-vues courante en fonction respectivement de K sous-images de référence d'une image multi-vues de référence précédemment décodée, délivrant des K sous-images prédites,

- si le signal de données contient K valeurs de vecteurs mouvement calculées au codage, les K vecteurs mouvement décrivant le mouvement entre K sous-images à reconstruire et respectivement K sous-images de référence précédemment décodées, prédiction, à l'aide des données résiduelles décodées et des K valeurs de vecteur mouvement, de chacune des K sous-images courantes de l'image multi-vues courante en fonction respectivement de K sous-images de référence d'une image multi-vues de référence précédemment décodée, délivrant des K sous-images prédites.

Selon un autre mode de réalisation particulier, dans le cas où le signal de données contient K valeurs de vecteurs mouvement, le décodage est de type MVC.

De façon correspondante, l'invention concerne un dispositif de décodage d'un signal de données représentatif d'au moins une image intégrale qui a été précédemment codée, une telle image intégrale étant représentative d'au moins un objet en perspective dans une scène et comprenant une pluralité d'images élémentaires.

Un tel dispositif est remarquable en ce qu'il comprend :

- des moyens de décompression adaptative d'une image multi-vues courante précédemment codée, en fonction du type de déplacement de l'objet dans la scène, tel que contenu dans ledit signal,
- des moyens d'agencement selon un motif déterminé d'une pluralité de K sous-images courantes de l'image multi-vues courante, pour reconstruire l'image multi-vues de l'objet, les vues de l'image multi-vues correspondant respectivement aux sous-images,
- des moyens de génération de la pluralité d'images élémentaires à partir de l'agencement des K sous-images, pour reconstruire l'image intégrale.

Selon un mode de réalisation particulier, les moyens de décompression adaptative comprennent :

- des sous-moyens de décodage de données résiduelles qui sont relatives à la pluralité de K sous-images précédemment codées, les données résiduelles étant contenues dans le signal de données,
- des sous-moyens de prédiction, à l'aide des données résiduelles décodées, de chacune des K sous-images courantes de l'image multi-vues courante en fonction respectivement de K sous-images de référence d'une image multi-vues de référence précédemment décodée, délivrant des K sous-images prédites, les sous-moyens de prédiction utilisant en outre pour la prédiction :

- soit la valeur d'un vecteur mouvement calculé à partir d'une valeur de la profondeur dont s'est déplacé l'objet dans la scène, si une telle valeur est contenue dans le signal de données,
- soit une seule valeur de vecteur mouvement calculée au codage, un tel vecteur décrivant le mouvement entre une des K sous-images à reconstruire et une des K sous-images de référence précédemment décodées, si une telle valeur est contenue dans le signal de données,
- soit K valeurs de vecteurs mouvement calculées au codage, les K vecteurs mouvement décrivant le mouvement entre K sous-images à reconstruire et respectivement K sous-images de référence précédemment décodées, si de telles K valeurs sont contenues dans le signal de données.

Selon un autre mode de réalisation particulier, le décodage effectué est de type MVC, dans le cas où le signal de données contient K valeurs de vecteurs mouvement.

Selon un troisième aspect, l'invention concerne un programme d'ordinateur comportant des instructions pour mettre en œuvre l'un des procédés selon l'invention, lorsqu'il est exécuté sur un ordinateur.

L'invention vise également un programme d'ordinateur sur un support d'informations, ce programme comportant des instructions adaptées à la mise en œuvre de l'un des procédés selon l'invention, tels que décrits ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Le procédé de décodage, le dispositif de codage, le dispositif de décodage et les programmes d'ordinateur précités présentent au moins les mêmes avantages que ceux conférés par le procédé de codage selon la présente invention.

Brève description des dessins

D'autres caractéristiques et avantages apparaîtront à la lecture de plusieurs modes de réalisation préféré décrits en référence aux figures dans lesquelles:

- la figure 1 représente des étapes du procédé de codage selon l'invention,
- la figure 2 représente un mode de réalisation d'un dispositif de codage selon l'invention,
- les figures 3A et 3B représentent une étape d'acquisition d'image intégrale du procédé de codage selon l'invention,
- la figure 4 représente une étape de génération de sous-images à partir de l'image intégrale acquise telle que représentée à la figure 3A,
- les figures 5A à 5D représentent différents motifs possibles d'agencement de sous-images constitutif d'une image multi-vues,
- les figures 6A et 6B représentent respectivement deux cas particuliers de déplacement d'un objet dans une scène,
- les figures 7A et 7B représentent respectivement un premier type de structure de codage MVC appliqué aux images multi-vues des figures 5B à 5D et un deuxième type de structure de codage de type MVC appliqué à l'image multi-vue représentée à la figure 5A,
- la figure 8 représente un dispositif de décodage selon l'invention,
- la figure 9 représente des étapes du procédé de décodage selon l'invention.

Description détaillée d'un mode de réalisation

Un mode de réalisation de l'invention va maintenant être décrit, dans lequel le procédé de codage selon l'invention est utilisé pour coder une séquence d'images intégrales.

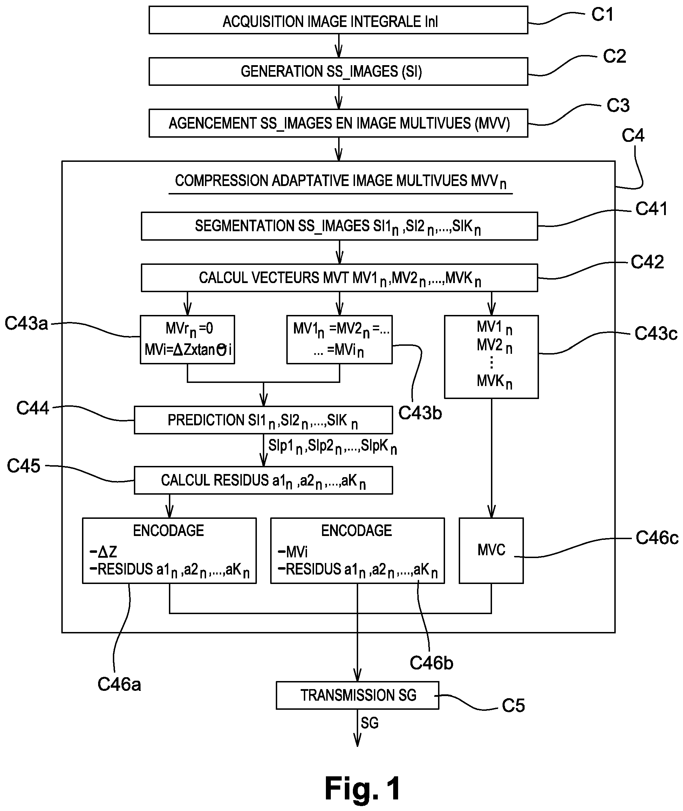

Le procédé de codage selon l'invention est représenté sous la forme d'un algorithme comportant des étapes C1 à C5, représentées à la **figure 1.**

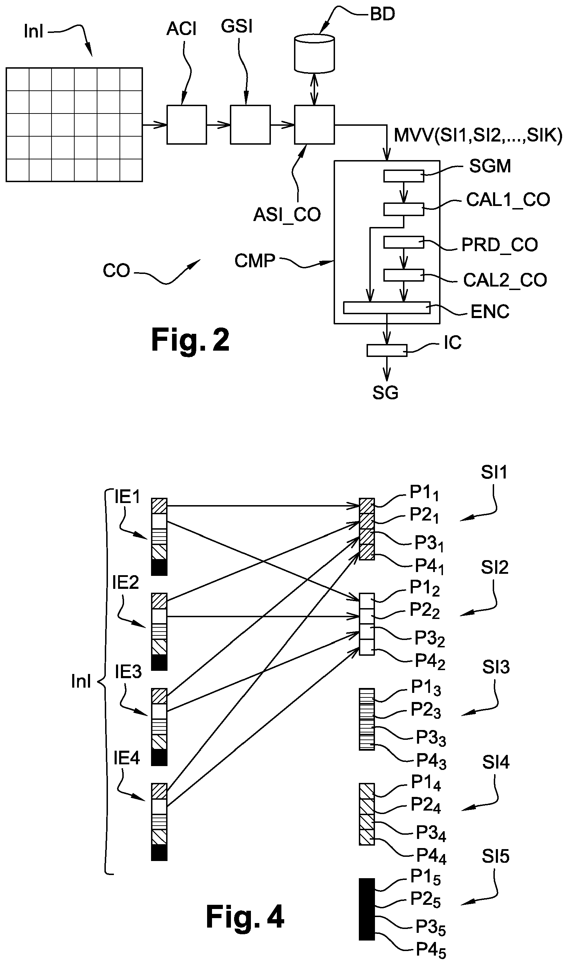

Selon le mode de réalisation de l'invention, le procédé de codage selon l'invention est implémenté dans un dispositif de codage CO représenté à la **figure 2.**

La première étape C1, représentée à la **figure 1,** est l'acquisition d'une image intégrale InI de la séquence d'images à coder par un module d'acquisition d'image ACI représenté sur la **figure 2.**

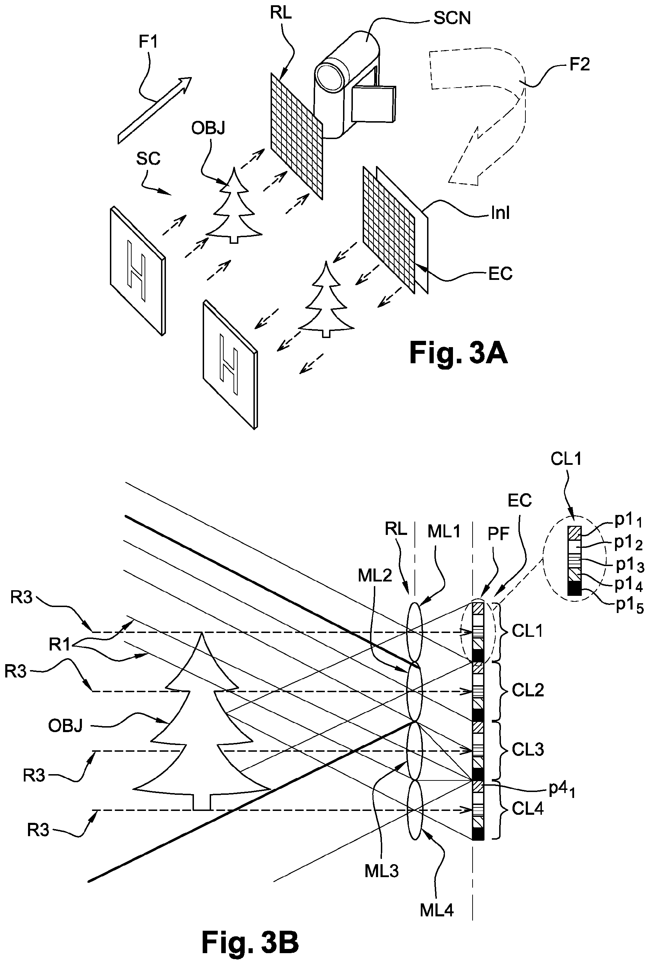

Un exemple d'acquisition d'image intégrale est représenté sur les **figures 3A** et **3B.**

Dans l'exemple représenté, l'image intégrale InI est représentative d'un objet OBJ en perspective dans une scène SC en trois dimensions. L'image intégrale InI est acquise dans le sens de la flèche F1 par un scanner 2D de type CCD (abréviation anglaise de « Charged-Coupled Device ») qui est désigné par la référence SCN sur la **figure 3A,** puis reconstruite sur un écran EC, dans le sens de la flèche F2. Une telle acquisition est effectuée au moyen d'un réseau lenticulaire RL qui est disposé entre l'objet OBJ et le scanner SCN.

Dans l'exemple représenté sur la **figure 3B,** le réseau lenticulaire RL comprend quatre microlentilles identiques ML1, ML2, ML3 et ML4. Un écran EC est disposé dans le plan focal des microlentilles précitées, un tel écran étant apte à restituer l'image intégrale InI à un observateur. De façon connue en soi, l'écran EC comprend une matrice de pixels qui comprend plusieurs cellules identiques constituées chacune d'une pluralité de pixels de couleur différente. Chaque cellule a la même taille qu'une microlentille. Dans l'exemple représenté sur la **figure 3B,** l'écran EC comprend quatre cellules de pixels CL1, CL2, CL3 et CL4 disposées respectivement en correspondance avec les quatre microlentilles ML1, ML2, ML3 et ML4. Chaque cellule est composée par exemple de cinq pixels de couleur différente. Pour une cellule CLj donnée ($1 \leq j \leq 4$), cette dernière contient cinq pixels $Pj_1$, $Pj_2$, $Pj_3$, $Pj_4$, $Pj_5$. A titre illustratif, la **figure 3B** représente en vue agrandie la composition d'une cellule CL1 constituée de cinq pixels $P1_1$, $P1_2$, $P1_3$, $P1_4$, $P1_5$.

Pendant l'acquisition, des rayons lumineux provenant de l'objet OBJ traversent chaque microlentille ML1, ML2, ML3 et ML4, puis viennent frapper les pixels de chaque cellule CL1, CL2, CL3 et CL4, dans le plan focal PF desdites microlentilles. Compte tenu de la configuration particulière du réseau lenticulaire RL et de la matrice de pixels constituant l'écran EC, les rayons lumineux :

- frappent selon un premier angle d'incidence le pixel $P1_1$ de la cellule CL1, le pixel $P2_1$ de la cellule CL2, le pixel $P3_1$ de la cellule CL3 le pixel $P4_1$ de la cellule CL4,
- frappent selon un deuxième angle d'incidence le pixel $P1_2$ de la cellule CL1, le pixel $P2_2$ de la cellule CL2, le pixel $P3_2$ de la cellule CL3 et le pixel $P4_2$ de la cellule CL4,
- frappent selon un troisième angle d'incidence le pixel $P1_3$ de la cellule CL1, le pixel $P2_3$ de la cellule CL2, le pixel $P3_3$ de la cellule CL3 et le pixel $P4_3$ de la cellule CL4,
- frappent selon un quatrième angle d'incidence le pixel $P1_4$ de la cellule CL1, le pixel $P2_4$ de la cellule CL2, le pixel $P3_4$ de la cellule CL3 et le pixel $P4_4$ de la cellule CL4,
- frappent selon un cinquième angle d'incidence le pixel $P1_5$ de la cellule CL1, le pixel $P2_5$ de la cellule CL2, le pixel $P3_5$ de la cellule CL3 et le pixel $P4_5$ de la cellule CL4.

De façon connue en soi, chaque angle d'incidence correspond à un angle de visualisation particulier selon lequel un observateur a la possibilité de visualiser en perspective l'objet OBJ. Les valeurs de ces angles sont limitées par la valeur de l'angle de visualisation d'une microlentille ML1, ML2, ML3, ML4. Un tel angle de visualisation, correspondant à celui de la microlentille ML2 est représenté en trait plein et gras sur la **figure 3B** à titre illustratif.

Dans un souci de clarté de la **figure 3B,** seuls deux rayons lumineux d'incidence différente sont représentés. Dans l'exemple représenté sur la **figure 3B** :

- les rayons lumineux R1 vient frapper le pixel $P4_1$ de la cellule CL4 selon un certain angle qui correspond à un angle de visualisation particulier selon lequel un observateur a la possibilité de visualiser l'objet OBJ selon une perspective particulière correspondant audit angle de visualisation,
- les rayons lumineux R3 viennent frapper respectivement le pixel $P1_3$ de la cellule CL1, le pixel $P2_3$ de la cellule CL2, le pixel $P3_3$ de la cellule CL3 et le pixel $P4_3$ de la cellule CL4 selon un angle d'incidence de valeur nulle.

Dans l'exemple représenté, à la suite de l'étape d'acquisition C1, quatre images de l'objet OBJ selon quatre perspectives différentes sont enregistrées puisqu'il y a quatre microlentilles. De façon connue en soi, ces quatre images constituent les images élémentaires de l'image intégrale InI.

Au cours d'une étape C2 représentée à **la figure 1,** de façon connue en soi, il est procédé, à la suite de l'étape d'acquisition C1, à la génération d'une pluralité de K sous-images SI1, SI2, ..., SIK à partir de ladite pluralité d'images élémentaires constituant l'image intégrale InI, où K est un entier qui correspond au nombre de pixels d'une cellule de pixels de la matrice de pixels utilisée. Une telle génération de sous-images est mise en œuvre par un module logiciel GSI tel que représenté sur la **figure 2.**

Un exemple d'une telle étape C2 de génération de sous-images à partir de l'image intégrale représentée sur la **figure 3A** est représenté sur la **figure 4.**

Dans l'exemple représenté, l'image intégrale InI comprend quatre images élémentaires IE1, IE2, IE3 et IE4 constituée respectivement de cinq pixels de couleur différente tels que mentionnés ci-dessus. Au cours de l'étape C2 de génération de sous-images, il est procédé :

- au regroupement, dans une première sous-image SI1, des pixels respectifs $P1_1$, $P2_1$, $P3_1$, $P4_1$ de chacune des images élémentaires IE1, IE2, IE3, IE4 qui correspondent à un premier angle de visualisation en perspective,
- au regroupement, dans une deuxième sous-image SI2, des pixels respectifs $P1_2$, $P2_2$, $P3_2$, $P4_2$ de chacune des images élémentaires IE1, IE2, IE3, IE4 qui correspondent à un deuxième angle de visualisation en perspective,

- au regroupement, dans une troisième sous-image SI3, des pixels respectifs $P1_3$, $P2_3$, $P3_3$, $P4_3$ de chacune des images élémentaires IE1, IE2, IE3, IE4 qui correspondent à un troisième angle de visualisation en perspective,
- au regroupement, dans une quatrième sous-image SI4, des pixels respectifs $P1_4$, $P2_4$, $P3_4$, $P4_4$ de chacune des images élémentaires IE1, IE2, IE3, IE4 qui correspondent à un quatrième angle de visualisation en perspective,
- au regroupement, dans une cinquième sous-image SI5, des pixels respectifs $P1_5$, $P2_5$, $P3_5$, $P4_5$ de chacune des images élémentaires IE1, IE2, IE3, IE4 qui correspondent à un cinquième angle de visualisation en perspective.

Dans un souci de clarté de la figure, seuls les deux premiers regroupements sont représentés par des flèches.

Au cours d'une étape C3 représentée à **la figure 1**, il est procédé selon l'invention à l'agencement des sous-images générées à l'étape C2, selon un motif prédéterminé, de façon à constituer une image multi-vues de l'objet OBJ, les vues de l'image multi-vues étant constituées respectivement par les sous-images générées. Un tel agencement des sous-images en une image multi-vues est particulièrement intéressant car il tire partie des redondances tant spatiales que temporelles entre les sous-images générées lors du traitement d'une image intégrale mais également entre chacune des sous-images générées lors du traitement d'une image intégrale courante et respectivement chacune des sous-images générées lors du traitement d'une ou de plusieurs autres images intégrales précédentes.

La forme du motif est choisie de façon à optimiser la corrélation spatiale et temporelle entre les sous-images générées.

Ladite étape d'agencement C3 est mise en œuvre par un module logiciel ASI_CO tel que représenté à la **figure 2** qui sélectionne un motif prédéterminé dans une base de données BD du codeur CO.

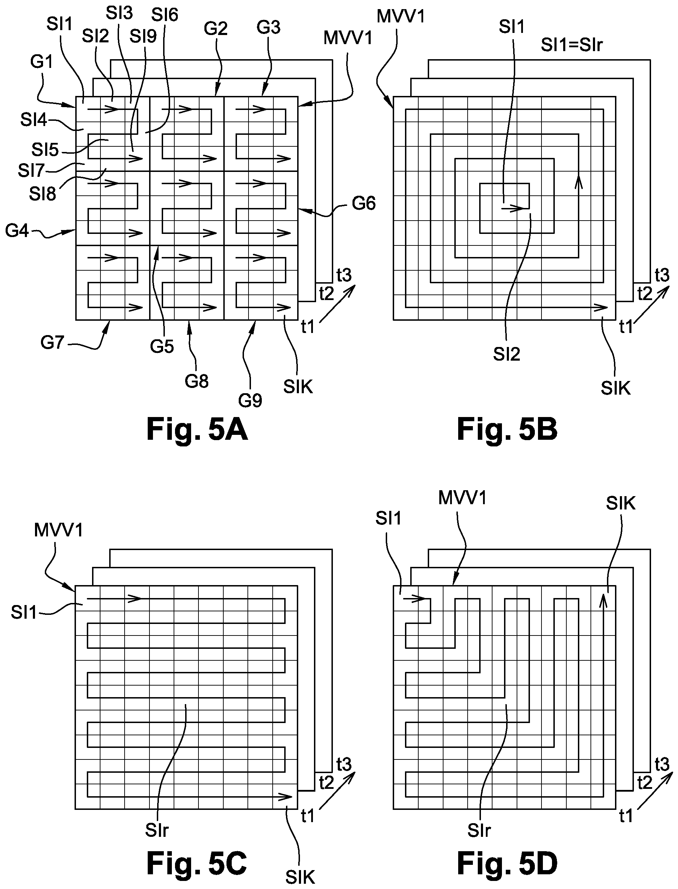

Les différentes formes de motifs sont représentées sur les **figures 5A** à **5D.**

Dans tous les cas, pour une pluralité K de sous-images SI1, SI2,..., SIK générées à l'étape C2, la sous-image SIr ($1 \leq r \leq K$), pour laquelle le r ième angle de visualisation correspondant a une valeur nulle, constitue selon l'invention la vue référence Vr de l'image multi-vues MVV1 à constituer au temps t1 et est disposée au centre de cette dernière.

Selon un premier exemple préférentiel représenté à la **figure 5A,** les K sous-images SI1, SI2,..., SIK sont réparties successivement en K/9 groupes G1, G2,..., GK/9 de 9 sous-images, les sous-images SI1, SI2,..., SIK constituant respectivement les vues V1, V2,..., VK de l'image multi-vues MVV ainsi constituée.

Selon un deuxième exemple représenté à la **figure 5B,** les K sous-images SI1, SI2,..., SIK sont agencées successivement en spirale, la vue Vr disposée au centre de la spirale étant la sous-image SIr précitée, pour laquelle le r ième angle de visualisation correspondant a une valeur nulle.

Selon un troisième exemple représenté à la **figure 5C,** les K sous-images SI1, SI2,..., SIK sont agencées successivement de gauche à droite.

Selon un quatrième exemple représenté à la **figure 5D,** les K sous-images SI1, SI2,..., SIK sont agencées successivement de gauche à droite

Au cours d'une étape suivante C4 représentée à la **figure 1,** il est procédé à la compression adaptative de l'image multi-vues ainsi constituée à l'étape C3, en fonction du type de déplacement de l'objet OBJ dans la scène SC.

Une telle étape est mise en œuvre par un module logiciel de compression CMP représenté sur la **figure 2.**

A nouveau en référence à la **figure 1,** une telle étape de compression adaptative C4 comprend une première sous-étape C41, au cours de laquelle il est procédé, pour chaque sous-image courante $SI1_n$ à $SIK_n$ d'une image multi-vue courante $MVV_n$, à une segmentation de l'objet OBJ représenté aux **figures 3A** et **3B,** ainsi que de l'arrière-plan dudit objet.

Une telle étape est mise en œuvre par un module logiciel de segmentation SGM de type tout à fait classique, lequel est représenté à la **figure 2.**

Au cours d'une sous-étape C42 représentée à la **figure 1,** il est procédé au calcul de K vecteurs mouvement MV1, MV2,..., MVK décrivant le mouvement entre les K sous-images courantes $SI1_n$ à $SIK_n$ et respectivement les K sous-images de référence SIref1, SIref2,..., SIrefK.

Une telle étape est effectuée par un premier module logiciel de calcul CAL1_CO tel que représenté à la **figure 2.**

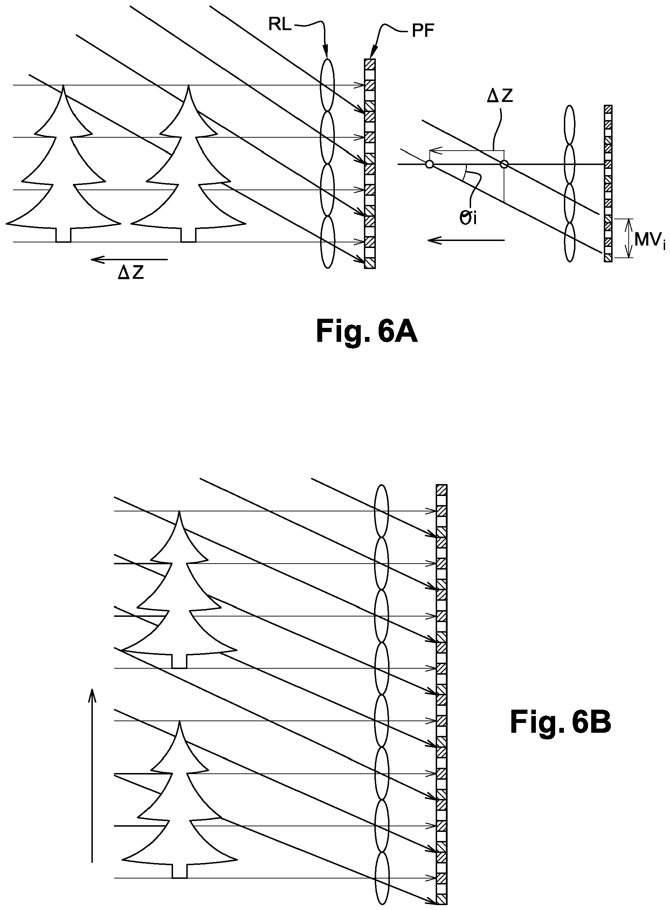

Selon une première alternative représentée à la **figure 6A,** pour laquelle l'objet OBJ se déplace uniquement dans la direction de la profondeur par rapport au scanner SCN, le vecteur mouvement MVr décrivant le mouvement entre la r ième sous-image centrale courante $SIr_n$, pour laquelle le r ième angle de visualisation correspondant a une valeur nulle, et la sous-image de référence correspondante SIrref de l'image multi-vues de référence MVVref, a une valeur nulle. Par conséquent, comme représenté sur la **figure 6A,** les vecteurs de mouvement associés aux sous-images courantes autres que la r ième sous-image courante sont fonction de l'angle de visualisation associé à la sous-image considérée. Dans ce cas représenté à la **figure 6A,** un vecteur mouvement considéré MVi ($1 \leq i \leq 5$) est calculé selon la relation trigonométrique suivante :

$MVi = \Delta Z \times \tan\theta i$ où $\Delta Z$ représente la valeur de la profondeur d'ont s'est déplacé l'objet OBJ et $\theta i$ représente l'angle de visualisation d'un ième pixel $pj_i$ d'une jème cellule de pixels considérée CLj ($1 \leq j \leq 4$).

Comme MVi et $\theta$i sont des valeurs connues au codeur CO, il est procédé, au cours d'une étape C43a,

$$\Delta Z = \frac{MVi}{\theta i}.$$

au calcul de

Selon une deuxième alternative représentée à la **figure 6B,** pour laquelle l'objet OBJ se déplace uniquement dans un plan vertical, il est constaté au cours d'une sous-étape de calcul C43b que les vecteurs mouvements $MV1_n$, $MV2_n$,..., $MVK_n$ associés respectivement aux sous-images courantes $SI1_n$, $SI2_n$,..., $SIK_n$ de l'image multi-vues courante $MVV_n$ ont des valeurs égales : $MV1_n = MV2_n = ... = MVK_n$.

Selon une troisième alternative (non représentée) pour laquelle l'objet OBJ se déplace dans les trois dimensions de la scène SC ou bien uniquement selon deux dimensions, il est procédé au calcul de tous les vecteurs mouvement courants $MV1_n$, $MV2_n$,..., $MVK_n$, au cours d'une sous-étape C43c.

Au cours d'une sous-étape C44 représentée à la **figure 1** et qui fait suite aux sous-étapes précitées C43a ou C43b, il est procédé à la prédiction de chacune des K sous-images courantes de l'image multi-vues courante $MVV_n$ en fonction respectivement de K sous-images de référence SIref1, SIref2,...,SIrefK d'une image multi-vues de référence MVVref précédemment codée puis décodée conformément à l'invention. Il est ainsi obtenu K sous-images prédites $SIp1_n$, $SIp2_n$,..., $SIpK_n$. Ladite prédiction est effectuée dans le sens des flèches représentées aux **figures 5A** à **5D,** en fonction du motif d'agencement des sous-images considéré.

Une telle étape est effectuée par un second module logiciel de prédiction PRD_CO tel que représenté à la **figure 2.**

Au cours d'une sous-étape C45 représentée à la **figure 1,** un second module de calcul CAL2_CO, tel que représenté à la **figure 2,** détermine des données résiduelles $a1_n$, $a2_n$,..., $aK_n$ par comparaison des données relatives à chaque sous-image courante $SI1_n$ à $SIK_n$, respectivement aux données relatives à chaque sous-image prédite obtenue $SIp1_n$, $SIp2_n$,..., $SIpK_n$.

Au cours d'une sous-étape C46a représentée à la **figure 1,** il est procédé à l'encodage uniquement de la valeur de profondeur $\Delta Z$ calculée à la sous-étape C43a et les données résiduelles correspondantes déterminées à la sous-étape C45 précitée.

Au cours d'une sous-étape C46b représentée à la **figure 1,** il est procédé à l'encodage d'un seul $MVi_n$ des vecteurs mouvement calculés à la sous-étape de calcul C43b, ainsi que des données résiduelles correspondantes déterminées à la sous-étape C45 précitée.

Une telle étape d'encodage C46a ou C46b est effectuée par un encodeur de type tout à fait classique, tel que représenté à la **figure 2** et désigné par la référence ENC. Un tel encodeur fonctionne par exemple selon la norme H.264/MPEG-AVC.

Au cours d'une étape C46c, il est procédé à l'encodage des différents vecteurs mouvement calculés à la sous-étape précitée C43c.

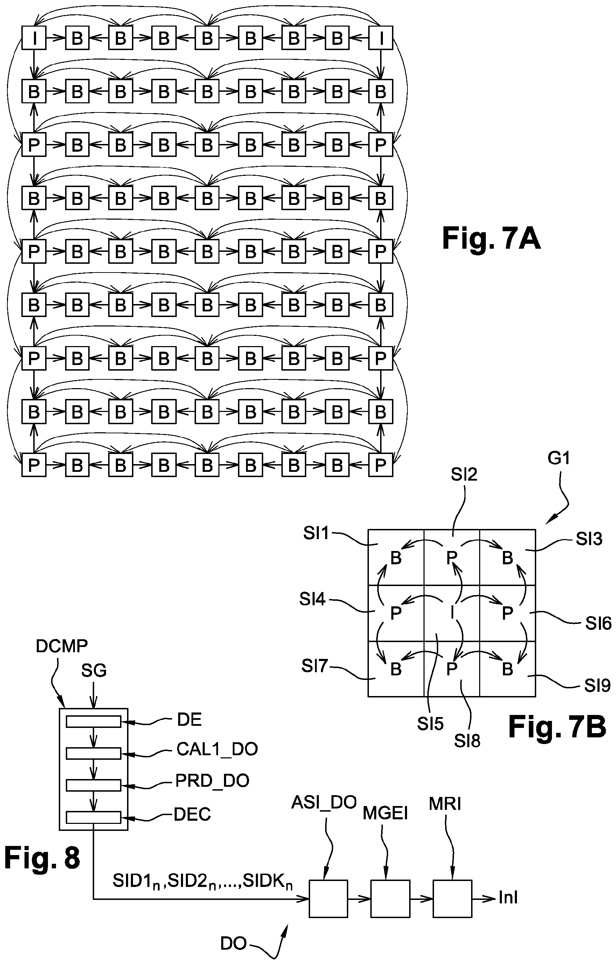

Conformément à l'invention, s'agissant des images multi-vues constituées sur les **figures 5B** à **5D,** chaque sous-image est encodée selon la norme MVC à l'aide d'un encodeur ENC de type MVC. La structure d'encodage est donc telle que représentée sur la **figure 7A** selon laquelle :

- certaines sous-images de l'image multi-vues courante, telles que symbolisées sur la **figure 7A** par la référence I, sont codées par prédiction spatiale (prédiction intra),
- certaines sous-images de l'image multi-vues courante, telles que symbolisées par la référence P sur la **figure 7A,** sont codées par prédiction temporelle (prédiction inter) par rapport à une sous-image de référence déjà codée/décodée, à l'aide d'une compensation en mouvement,
- certaines sous-images de l'image multi-vues courante, telles que symbolisées par la référence B sur la **figure 7A,** sont codées par bi-prédiction temporelle (prédiction inter) par rapport à une sous-image précédente déjà codée/décodée et une sous-image suivante déjà codée/décodée, à l'aide d'une compensation en mouvement.

En ce qui concerne l'image multi-vues constituée préférentiellement à la **figure 5A,** la présente invention propose une adaptation de la structure de codage MVC pour chacun des neuf groupes G1, G2,..., GK/9 de neuf sous-images.

Comme représenté à la **figure 7B,** pour chacun des groupes de sous-images, par exemple le groupe G1 représenté à la **figure 5A,** la sous-image centrale SI5 est encodée en tant qu'image I, les quatre sous-images SI2, SI4, SI6, SI8 disposées respectivement au-dessus, à gauche, à droite, en dessous de la sous-image centrale SI5 sont encodées en tant qu'image P, et les quatre sous-images SI1, SI3, SI7 et SI9 disposées respectivement dans les quatre coins du groupe G1 sont encodées en tant qu'image B. Une telle structure d'encodage du type MVC supprime de façon optimale les corrélations entre les sous-images adjacentes, ce qui permet de réduire avantageusement la complexité du procédé d'encodage.

A l'issue de l'étape d'encodage C46a, C46b ou C46c, un signal vidéo codé SG est produit, lequel est transmis au cours d'une étape C5 représentée à la **figure 1,** au moyen d'une interface de communication IC du dispositif de codage tel que représentée à la **figure 2,** via un réseau de communication, à un terminal distant. Celui-ci comporte un décodeur DO tel que représenté à la **figure 8.**

Le procédé de codage qui vient d'être décrit ci-dessus est réitéré pour une pluralité d'images intégrales appartenant à une séquence déterminée.

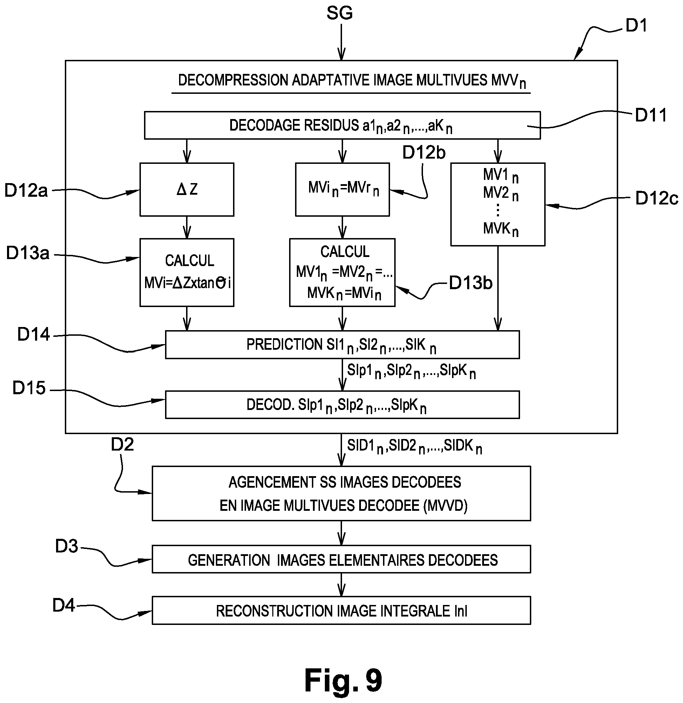

On va maintenant décrire à la **figure 9** le procédé de décodage selon l'invention mis en œuvre dans décodeur DO de la **figure 8.** Un tel procédé de décodage est effectué de façon inverse à celle du procédé de codage qui vient d'être décrit ci-dessus.

Au cours d'une première étape D1, il est procédé à une décompression de l'image multi-vues courante MVVn, à partir des informations contenues dans le signal SG reçu. Une telle décompression est adaptative car mise en œuvre en fonction de l'information sur le type de déplacement effectué par l'objet OBJ dans la scène SC, telle que contenue dans le signal SG reçu.

Une telle étape est effectuée par un module de décompression DCMP tel que représenté sur la **figure 8.**

En référence à nouveau à la **figure 9,** une telle étape de décompression comprend une sous-étape D11 de décodage des données résiduelles contenues dans le signal SG. Une telle étape est effectuée par un décodeur entropique DE tel que représenté **figure 8.**

Dans le cas où le signal SG contient la valeur $\Delta Z$ de profondeur dont s'est uniquement déplacé l'objet OBJ dans la scène SC, il est procédé, au cours d'une sous-étape D12a, à l'extraction de cette valeur, puis au calcul, au cours d'une sous-étape D13a, pour chaque sous-image courante à reconstruire, de leur vecteur mouvement respectif $MV1_n$, $MV2_n$,..., $MVK_n$ selon la relation $MVi= \Delta Z \times \tan\theta i$ avec $1 \leq i \leq K$.

Dans le cas où le signal SG contient une seule valeur de vecteur mouvement $MVi$ telle que calculée à la sous-étape de codage précitée C43b, il est procédé, au cours d'une sous-étape D12b, à l'extraction de cette valeur, puis au calcul, au cours d'une sous-étape D13b, pour chaque sous-image courante à reconstruire, de leur vecteur mouvement respectif $MV1_n$, $MV2_n$,..., $MVK_n$ selon la relation $MV1_n=MV2_n=...=MVK_n=MVi$.

Dans le cas où le signal SG contient différentes valeurs de vecteurs mouvement $MV1_n$, $MV2_n$,..., $MVi_n$,...,$MVK_n$ telle que calculées à la sous-étape de codage précitée C43c, il est procédé, au cours d'une sous-étape D12c, à l'extraction de ces valeurs.

Chacune des étapes D13a et D13b est mise en œuvre par un premier module logiciel de calcul CAL1_DO tel que représenté à la **figure 8.**

Au cours d'une sous-étape suivante D14, il est procédé :

- soit à la prédiction, à l'aide des données résiduelles décodées à la sous-étape D11 et des vecteurs mouvement calculés à la sous-étape D13a, de chacune des K sous-images courantes $SI1_n$, $SI2_n$,..., $SIK_n$ de ladite image multi-vues courante à reconstruire, en fonction respectivement de K sous-images de référence d'une image multi-vues de référence précédemment décodée, délivrant K sous-images prédites $SIp1_n$, $SIp2_n$,, $SIpK_n$,

- soit à la prédiction, à l'aide des données résiduelles décodées à la sous-étape D11 et des vecteurs mouvement calculés à la sous-étape D13b, de chacune des K sous-images courantes $SI1_n$, $SI2_n$,..., $SIK_n$ de ladite image multi-vues courante à reconstruire, en fonction respectivement de K sous-images de référence d'une image multi-vues de référence précédemment décodée, délivrant K sous-images prédites $SIp1_n$, $SIp2_n$,, $SIpK_n$,

- soit à la prédiction, à l'aide des données résiduelles décodées à la sous-étape D11 et des vecteurs mouvement calculés à la sous-étape D13c, de chacune des K sous-images courantes $SI1_n$, $SI2_n$,..., $SIK_n$ de ladite image multi-vues courante à reconstruire, en fonction respectivement de K sous-images de référence d'une image multi-vues de référence précédemment décodée, délivrant K sous-images prédites $SIp1_n$, $SIp2_n$,, $SIpK_n$.

Ladite étape D14 est mise en œuvre par un module logiciel de prédiction PRD_DO tel que représenté à la **figure 8.**

Au cours d'une sous-étape D15, les sous-images prédites obtenues à l'étape D14 sont décodées à l'aide d'un décodeur DEC représenté à la **figure 8 :**

- classiquement, comme par exemple selon la norme H.264/MPEG-AVC dans le cas où les étapes de calcul D13a ou D13b sont mises en œuvre,
- ou bien selon le standard MVC représenté **figure 7A** ou de type MVC selon la structure représentée **figure 7B,** dans le cas où l'étape de calcul D13c est mise en œuvre.

Au cours d'une étape de décodage suivante D2, il est procédé à l'agencement des sous-images décodées courantes SID1, SID2,..., SIDK obtenues à la sous-étape D15, l'agencement étant effectué dans l'ordre selon lesquels les sous-images courante ont été décodées, cet ordre respectant le sens de parcours de l'un des motifs représenté aux **figures 5A** à **5D.**

Ladite étape d'agencement D2 est mise en œuvre par un module logiciel ASI_DO tel que représenté à la **figure 8.**

Au cours d'une étape de décodage suivante D3, il est procédé à la génération d'une pluralité d'images élémentaires EI à partir de l'agencement des sous-images décodées effectué à l'étape précédente D2.

Une telle étape est mise en œuvre par un module MGEI de génération d'images élémentaires.

Une fois toutes les images élémentaires décodées générées, il est procédé, au cours d'une étape D4, à la reconstruction de l'image intégrale InI à partir des images élémentaires générées à l'étape D3.

Une telle étape est mise en œuvre par un module MRI de reconstruction d'image tel que représenté à la **figure 8.**

Le procédé de décodage qui vient d'être décrit ci-dessus est réitéré pour une pluralité d'images intégrales à reconstruire appartenant à une séquence déterminée.

## Revendications

**1.** Procédé de codage d'au moins une image intégrale (InI) courante représentative d'au moins un objet (OBJ) en perspective dans une scène et comprenant une pluralité d'images élémentaires (EI), ledit procédé mettant en œuvre une étape de génération d'une pluralité de K sous-images (SI1, SI2,..., SIK) à partir de ladite pluralité d'images élémentaires, ledit procédé étant **caractérisé en ce qu'**il met en œuvre les étapes de :

- agencement (C3) desdites sous-images de façon à constituer une image multi-vues dudit objet, lesdites vues correspondant respectivement auxdites sous-images, ledit agencement étant effectué selon un motif sélectionné parmi une pluralité de motifs,
- compression adaptative (C4) de ladite image multi-vues constituée, en fonction du type de déplacement de l'objet dans la scène, ladite étape de compression adaptative mettant en œuvre, pour une image multi-vues courante, les sous-étapes de :

- calcul (C42) de K vecteurs mouvement décrivant le mouvement entre lesdites K sous-images courantes et respectivement K sous-images de référence (SIref) d'une image multi-vues de référence précédemment codée puis décodée,
- calcul de la valeur ($\Delta Z$) de la profondeur dont s'est déplacé ledit objet dans la scène, si le vecteur mouvement calculé relativement à la sous-image courante qui est située au centre de l'image multi-vues courante a une valeur nulle,
- prédiction (C44), à l'aide desdits K vecteurs mouvement, de chacune des K sous-images courantes de ladite image multi-vues courante en fonction respectivement desdites K sous-images (SIref) de référence de ladite image multi-vues de référence précédemment codée puis décodée, délivrant des K sous-images prédites,
- détermination (C45) de données résiduelles, par comparaison de données relatives à chacune des K sous-images courantes et à respectivement chacune desdites K sous-images prédites, ledit procédé de codage mettant en outre en oeuvre:

- soit la transmission (C5) d'un signal de données comprenant au moins lesdites données résiduelles déterminées et ladite valeur ($\Delta Z$) de profondeur calculée, si le vecteur mouvement calculé relativement à la sous-image courante qui est située au centre de l'image multi-vues courante a une valeur nulle,
- soit la transmission (C5) d'un signal de données comprenant au moins lesdites données résiduelles déterminées et une seule valeur de l'un des K vecteurs mouvement calculés, si les K vecteurs mouvement calculés ont des valeurs égales,
- soit la transmission (C5) d'un signal de données comprenant au moins lesdites données résiduelles déterminées et les valeurs respectives des K vecteurs mouvement calculés, si au moins deux des K vecteurs mouvement calculés ont des valeurs différentes.

**2.** Procédé de codage selon la revendication 1, au cours duquel le codage est de type MVC, dans le cas où au moins deux des K vecteurs mouvement calculés ont des valeurs différentes.

**3.** Dispositif de codage d'au moins une image intégrale (InI) courante représentative d'au moins un objet en perspective dans une scène et comprenant une pluralité d'images élémentaires (EI), ledit dispositif comprenant des moyens (GSI) de génération d'une pluralité de K sous-images (SI) à partir de ladite pluralité d'images élémentaires, ledit dispositif étant **caractérisé en ce qu'**il comprend :

- des moyens (ASI_CO) d'agencement desdites sous-images de façon à constituer une image multi-vues dudit objet, lesdites vues correspondant respectivement auxdites sous-images, ledit agencement étant effectué selon un motif sélectionné parmi une pluralité de motifs;
- des moyens (CMP) de compression adaptative de ladite image multi-vues constituée en fonction du type de déplacement de l'objet dans la scène lesdits moyens comprenant, pour une image multi-vues courante :

- des sous-moyens (CAL1_CO) de calcul de K vecteurs mouvement décrivant le mouvement entre lesdites K sous-images courantes et respectivement K sous-images (SIref) de référence d'une image multi-vues de référence précédemment codée puis décodée,
- des sous-moens (PRD_CO) de prédiction, à l'aide desdits K vecteurs mouvement, de chacune des K sous-images courantes de ladite image multi-vues courante en fonction respectivement desdites K sous-images (SIref) de référence de ladite image multi-vues de référence précédemment codée puis décodée, délivrant des K sous-images prédites,
- des sous-moyens (CAL2_CO) de détermination de données résiduelles, par comparaison de données relatives à chacune des K sous-images courantes et à respectivement chacune desdites K sous-images prédites,
- des sous-moyens (IC) de transmission d'un signal de données comprenant au moins lesdites données résiduelles déterminées, lesdits sous-moyens de transmission transmettant en outre :

• soit une valeur (ΔZ) préalablement calculée de la profondeur dont s'est déplacé ledit objet dans la scène, si le vecteur mouvement calculé relativement à la sous-image courante qui est située au centre de l'image multi-vues courante a une valeur nulle,
• soit une seule valeur de l'un des K vecteurs mouvement calculés, si les K vecteurs mouvement calculés ont des valeurs égales,
• soit les valeurs respectives des K vecteurs mouvement calculés, si au moins deux des K vecteurs mouvement calculés ont des valeurs différentes.

**4.** Dispositif de codage selon la revendication 3, dans lequel le codage effectué est de type MVC, dans le cas où au moins deux des K vecteurs mouvement calculés ont des valeurs différentes.

**5.** Support d'information lisible par un processeur sur lequel est enregistré un programme d'ordinateur comportant des instructions qui, lorsqu'elles sont exécutées par un ordinateur, conduisent celui-ci à mettre en œuvre le procédé de codage selon l'une quelconque des revendications 1 à 2.

**6.** Procédé de décodage d'un signal de données représentatif d'au moins une image intégrale (InI) courante qui a été précédemment codée, ladite image intégrale étant représentative d'au moins un objet en perspective dans une scène et comprenant une pluralité d'images élémentaires (EI), ledit procédé étant **caractérisé en ce qu'**il met en œuvre les étapes de :

- décompression adaptative (D1) d'une image multi-vues courante précédemment codée, en fonction du type de déplacement de l'objet dans la scène, tel que contenu dans ledit signal de données,
- agencement (D2) d'une pluralité de K sous-images courantes de ladite image multi-vues courante, de façon à reconstruire l'image multi-vues dudit objet, lesdites vues correspondant respectivement auxdites sous-images, ledit agencement étant effectué selon un motif sélectionné parmi une pluralité de motifs,
- génération (D3) de ladite pluralité d'images élémentaires (EI) à partir de l'agencement desdites K sous-images, de façon à reconstruire ladite image intégrale (InI),
- l'étape de décompression adaptative mettant en œuvre, pour une image intégrale courante à reconstruire, les sous-étapes de :

- décodage (D11) de données résiduelles qui sont relatives à ladite pluralité de K sous-images de l'image multi-vues précédemment codée, lesdites données résiduelles étant contenues dans ledit signal de données,
- si le signal de données contient une valeur (ΔZ) de la profondeur dont s'est déplacé ledit objet dans la scène ;

• calcul (D13a) d'un vecteur mouvement correspondant audit déplacement,
• prédiction (D14), à l'aide desdits données résiduelles décodées et dudit vecteur mouvement calculé, de chacune des K sous-images courantes de ladite image multi-vues courante en fonction respectivement de K sous-images de référence d'une image multi-vues de référence précédemment décodée, délivrant des K sous-images prédites,

- si le signal de données contient une seule valeur de vecteur mouvement calculée au codage, ledit vecteur décrivant le mouvement entre une des K sous-images à reconstruire et une des K sous-images de référence précédemment décodées, prédiction (D14), à l'aide desdites données résiduelles décodées et dudit vecteur mouvement calculé, de chacune des K sous-images courantes de ladite image multi-vues courante en fonction respectivement de K sous-images de référence d'une image multi-vues de référence précédemment décodée, délivrant des K sous-images prédites,
- si le signal de données contient K valeurs de vecteurs mouvement calculées au codage, lesdits K vecteurs mouvement décrivant le mouvement entre K sous-images à reconstruire et respectivement K sous-images de référence précédemment décodées, prédiction (D14), à l'aide desdites données résiduelles décodées et desdites K valeurs de vecteur mouvement, de chacune des K sous-images courantes de ladite image multi-vues courante en fonction respectivement de K sous-images de référence d'une image multi-vues de référence précédemment décodée, délivrant des K sous-images prédites.

**7.** Procédé de décodage selon la revendication 6, au cours duquel, dans le cas où le signal de données contient K valeurs de vecteurs mouvement, le décodage est de type MVC.

**8.** Dispositif (DO) de décodage d'un signal de données représentatif d'au moins une image intégrale (InI) courante qui a été précédemment codée, ladite image intégrale étant représentative d'au moins un objet en perspective dans une scène et comprenant une pluralité d'images élémentaires (EI), ledit dispositif étant **caractérisé en ce qu'**il comprend :

    - des moyens (DCMP) de décompression adaptative d'une image multi-vues courante précédemment codée, en fonction du type de déplacement de l'objet dans la scène, tel que contenu dans ledit signal,

    - des moyens (ASI_DO) d'agencement d'une pluralité de K sous-images courantes de ladite image multi-vues courante, pour reconstruire l'image multi-vues dudit objet, lesdites vues correspondant respectivement auxdites sous-images, ledit agencement étant effectué selon un motif sélectionné parmi une pluralité de motifs,

    - des moyens (MGEI) de génération de ladite pluralité d'images élémentaires (EI) à partir de l'agencement desdites K sous-images, pour reconstruire ladite image intégrale (InI),

dans lequel lesdits moyens de décompression adaptative comprennent :

    - des sous-moyens (DE) de décodage de données résiduelles qui sont relatives à ladite pluralité de K sous-images précédemment codées, lesdites données résiduelles étant contenues dans ledit signal de données,

    - des sous-moyens (PRD_DO) de prédiction, à l'aide desdites données résiduelles décodées, de chacune des K sous-images courantes de ladite image multi-vues courante en fonction respectivement de K sous-images de référence d'une image multi-vues de référence précédemment décodée, délivrant des K sous-images prédites, lesdits sous-moyens de prédiction utilisant en outre pour la prédiction :

        • soit la valeur d'un vecteur mouvement calculé à partir d'une valeur (ΔZ) de la profondeur dont s'est déplacé ledit objet dans la scène, si une telle valeur est contenue dans ledit signal de données,
        • soit une seule valeur de vecteur mouvement calculée au codage, ledit vecteur décrivant le mouvement entre une des K sous-images à reconstruire et une des K sous-images de référence précédemment décodées, si une telle valeur est contenue dans ledit signal de données,
        • soit K valeurs de vecteurs mouvement calculées au codage, lesdits K vecteurs mouvement décrivant le mouvement entre K sous-images à reconstruire et respectivement K sous-images de référence précédemment décodées, si de telles K valeurs sont contenues dans ledit signal de données.

**9.** Dispositif de décodage selon la revendication 8, dans lequel le décodage effectué est de type MVC, dans le cas où le signal de données contient K valeurs de vecteurs mouvement.

**10.** Support d'information lisible par un processeur sur lequel est enregistré un programme d'ordinateur comportant des instructions qui, lorsqu'elles sont exécutées par un ordinateur, conduisent celui-ci à mettre en œuvre le procédé de décodage selon l'une quelconque des revendications 6 à 7.

## Patentansprüche

**1.** Verfahren zur Codierung mindestens eines aktuellen Integralbilds (InI), das für mindestens ein perspektivisches Objekt (OBJ) in einer Szene repräsentativ ist und umfassend eine Mehrzahl von Elementarbildern (EI), wobei das Verfahren einen Schritt des Erzeugens einer Mehrzahl von K Unterbildern (SI1, SI2,..., SIK) anhand der Mehrzahl von Elementarbildern durchführt, wobei das Verfahren **dadurch gekennzeichnet ist, dass** es die folgenden Schritte durchführt:

    - Anordnen (C3) der Unterbilder, um ein Mehrfachansichtsbild des Objekts zu bilden, wobei die Ansichten jeweils den Unterbildern entsprechen, wobei das Anordnen gemäß einem Motiv durchführt wird, das aus einer Mehrzahl von Motiven ausgewählt wird,
    - adaptives Komprimieren (C4) des gebildeten Mehrfachansichtsbilds in Abhängigkeit von der Art der Bewegung des Objekts in der Szene, wobei der Schritt des adaptiven Komprimierens für ein aktuelles Mehrfachansichtsbild die folgenden Unterschritte durchführt:

- Berechnen (C42) von K Bewegungsvektoren, die die Bewegung zwischen den K aktuellen Unterbildern und jeweils K Referenzunterbildern (SIref) eines Referenz-Mehrfachansichtsbilds beschreiben, das zuvor codiert, dann decodiert wurde,
- Berechnen des Werts ($\Delta Z$) der Tiefe, um die sich das Objekt in der Szene bewegt hat, wenn der Bewegungsvektor, der bezogen auf das aktuelle Unterbild berechnet wird, das sich in der Mitte des aktuellen Mehrfachansichtsbilds befindet, einen Wert von Null aufweist,
- Vorhersagen (C44), mithilfe der K Bewegungsvektoren, jedes der K aktuellen Unterbilder des aktuellen Mehrfachansichtsbilds in Abhängigkeit von jeweils den K Referenzunterbildern (SIref) des Referenz-Mehrfachansichtsbilds, das zuvor codiert, dann decodiert wurde, wobei K vorhergesagte Unterbilder geliefert werden,
- Bestimmen (C45) von Restdaten durch Vergleichen von Daten bezogen auf jedes der K aktuellen Unterbilder bzw. auf jedes der K vorhergesagten Unterbilder, wobei das Verfahren zur Codierung ferner Folgendes durchführt:

- entweder das Übertragen (C5) eines Datensignals umfassend zumindest die bestimmten Restdaten und den berechneten Tiefenwert ($\Delta Z$), wenn der Bewegungsvektor, der bezogen auf das aktuelle Unterbild berechnet wird, das sich in der Mitte des aktuellen Mehrfachansichtsbilds befindet, einen Wert von Null aufweist,
- oder das Übertragen (C5) eines Datensignals umfassend zumindest die bestimmten Restdaten und einen Einzelwert eines der K berechneten Bewegungsvektoren, wenn die K berechneten Bewegungsvektoren gleiche Werte aufweisen,
- oder das Übertragen (C5) eines Datensignals umfassend zumindest die bestimmten Restdaten und die jeweiligen Werte der K berechneten Bewegungsvektoren, wenn mindestens zwei der K berechneten Bewegungsvektoren unterschiedliche Werte aufweisen.

2. Verfahren zur Codierung nach Anspruch 1, wobei die Codierung vom MVC-Typ ist, in dem Fall, dass mindestens zwei der K berechneten Bewegungsvektoren unterschiedliche Werte aufweisen.

3. Vorrichtung zur Codierung mindestens eines aktuellen Integralbilds (InI), das für mindestens ein perspektivisches Objekt in einer Szene repräsentativ ist und umfassend eine Mehrzahl von Elementarbildern (EI), wobei die Vorrichtung Mittel (GSI) zum Erzeugen einer Mehrzahl von K Unterbildern (SI) anhand der Mehrzahl von Elementarbildern durchführt, wobei die Vorrichtung **dadurch gekennzeichnet ist, dass** sie Folgendes umfasst:

- Mittel (ASI CO) zum Anordnen der Unterbilder, um ein Mehrfachansichtsbild des Objekts zu bilden, wobei die Ansichten jeweils den Unterbildern entsprechen, wobei das Anordnen gemäß einem Motiv durchgeführt wird, das aus einer Mehrzahl von Motiven ausgewählt wird;
- Mittel (CMP) zum adaptiven Komprimieren des gebildeten Mehrfachansichtsbilds in Abhängigkeit von der Art der Bewegung des Objekts in der Szene, die Mittel umfassend, für ein aktuelles Mehrfachansichtsbild:

- Untermittel (CAL1_CO) zum Berechnen von K Bewegungsvektoren, die die Bewegung zwischen den K aktuellen Unterbildern und jeweils K Referenzunterbildern (SIref) eines Referenz-Mehrfachansichtsbilds beschreiben, das zuvor codiert, dann decodiert wurde,
- Untermittel (PRD_CO) zum Vorhersagen, mithilfe der K Bewegungsvektoren, jedes der K aktuellen Unterbilder des aktuellen Mehrfachansichtsbilds in Abhängigkeit von jeweils den K Referenzunterbildern (SIref) des Referenz-Mehrfachansichtsbilds, das zuvor codiert, dann decodiert wurde, wobei K vorhergesagte Unterbilder geliefert werden,
- Untermittel (CAL2_CO) zum Bestimmen von Restdaten durch Vergleichen von Daten bezogen auf jedes der K aktuellen Unterbilder bzw. auf jedes der K vorhergesagten Unterbilder,
- Untermittel (IC) zum Übertragen eines Datensignals umfassend zumindest die bestimmten Restdaten, wobei die Untermittel zum Übertragen ferner Folgendes übertragen:

• entweder einen zuvor berechneten Wert ($\Delta Z$) der Tiefe, um die sich das Objekt in der Szene bewegt hat, wenn der Bewegungsvektor, der bezogen auf das aktuelle Unterbild berechnet wird, das sich in der Mitte des aktuellen Mehrfachansichtsbilds befindet, einen Wert von Null aufweist,
• oder einen Einzelwert eines der K berechneten Bewegungsvektoren, wenn die K berechneten Bewegungsvektoren gleiche Werte aufweisen,
• oder die jeweiligen Werte der K berechneten Bewegungsvektoren, wenn mindestens zwei der K berechneten Bewegungsvektoren unterschiedliche Werte aufweisen.

4. Codiervorrichtung nach Anspruch 3, wobei die durchgeführte Codierung vom MVC-Typ ist, in dem Fall, dass mindestens zwei der K berechneten Bewegungsvektoren unterschiedliche Werte aufweisen.

5. Informationsträger, der von einem Prozessor gelesen werden kann, auf dem ein Computerprogramm gespeichert ist, umfassend Anweisungen, die bei Ausführung durch einen Computer diesen dazu veranlassen, das Verfahren zur Codierung nach einem der Ansprüche 1 bis 2 durchzuführen.

6. Verfahren zur Decodierung eines Datensignals, das für mindestens ein aktuelles Integralbild (InI) repräsentativ ist, das zuvor codiert wurde, wobei das Integralbild für mindestens ein perspektivisches Objekt in einer Szene repräsentativ ist und umfassend eine Mehrzahl von Elementarbildern (EI), wobei das Verfahren **dadurch gekennzeichnet ist, dass** es die folgenden Schritte durchführt:

- adaptives Dekomprimieren (D1) eines aktuellen Mehrfachansichtsbilds, das zuvor codiert wurde, in Abhängigkeit von der Art der Bewegung des Objekts in der Szene, wie es in dem Datensignal enthalten ist,
- Anordnen (D2) einer Mehrzahl von K aktuellen Unterbildern des aktuellen Mehrfachansichtsbilds, um das Mehrfachansichtsbild des Objekts zu rekonstruieren, wobei die Ansichten jeweils den Unterbildern entsprechen, wobei das Anordnen gemäß einem Motiv durchgeführt wird, das aus einer Mehrzahl von Motiven ausgewählt wird,
- Erzeugen (D3) der Mehrzahl von Elementarbildern (EI) anhand der Anordnung der K Unterbilder, um das Integralbild (InI) zu rekonstruieren,
- wobei der Schritt des adaptiven Komprimierens für ein aktuelles zu rekonstruierendes Integralbild die folgenden Unterschritte durchführt:

- Decodieren (D11) von Restdaten, die auf die Mehrzahl von K Unterbildern des Mehrfachansichtsbilds bezogen sind, das zuvor codiert wurde, wobei die Restdaten in dem Datensignal enthalten sind,

- wenn das Datensignal einen Wert (ΔZ) der Tiefe enthält, um die sich das Objekt in der Szene bewegt hat;

• Berechnen (D13a) eines Bewegungsvektors, der der Bewegung entspricht,
• Vorhersagen (D14), mithilfe der decodierten Restdaten und des berechneten Bewegungsvektors, jedes der K aktuellen Unterbilder des aktuellen Mehrfachansichtsbilds in Abhängigkeit von jeweils K Referenzunterbildern eines zuvor decodierten Referenz-Mehrfachansichtsbilds, wobei K vorhergesagte Unterbilder geliefert werden,

- wenn das Datensignal einen Einzelwert eines Bewegungsvektors enthält, der beim Codieren berechnet wurde, wobei der Vektor die Bewegung zwischen einem der K zu rekonstruierenden Unterbilder und einem der K zuvor decodierten Referenzunterbilder beschreibt, Vorhersagen (D14), mithilfe der decodierten Restdaten und des berechneten Bewegungsvektors, jedes der K aktuellen Unterbilder des aktuellen Mehrfachansichtsbilds in Abhängigkeit von jeweils K Referenzunterbildern eines zuvor decodierten Referenz-Mehrfachansichtsbilds, wobei K vorhergesagte Unterbilder geliefert werden,
- wenn das Datensignal K Werte von Bewegungsvektoren enthält, die beim Codieren berechnet wurden, wobei die K Bewegungsvektoren die Bewegung zwischen K zu rekonstruierenden Unterbildern und jeweils K zuvor decodierten Referenzunterbildern beschreiben, Vorhersagen (D14), mithilfe der decodierten Restdaten und der K Bewegungsvektorwerte, jedes der K aktuellen Unterbilder des aktuellen Mehrfachansichtsbilds in Abhängigkeit von jeweils K Referenzunterbildern eines zuvor decodierten Referenz-Mehrfachansichtsbilds, wobei K vorhergesagte Unterbilder geliefert werden.

7. Verfahren zur Decodierung nach Anspruch 6, wobei, in dem Fall, dass das Datensignal K Werte von Bewegungsvektoren enthält, die Decodierung vom MVC-Typ ist.

8. Vorrichtung (DO) zur Decodierung eines Datensignals, das für mindestens ein aktuelles Integralbild (InI) repräsentativ ist, das zuvor codiert wurde, wobei das Integralbild für mindestens ein perspektivisches Objekt in einer Szene repräsentativ ist und umfassend eine Mehrzahl von Elementarbildern (EI), wobei die Vorrichtung **dadurch gekennzeichnet ist, dass** sie Folgendes umfasst:

   - Mittel (DCMP) zum adaptiven Dekomprimieren eines zuvor codierten aktuellen Mehrfachansichtsbilds in Abhängigkeit von der Art der Bewegung des Objekts in der Szene, wie es in dem Signal enthalten ist,
   - Mittel zum Anordnen (ASI DO) einer Mehrzahl von K aktuellen Unterbildern des aktuellen Mehrfachansichtsbilds, um das Mehrfachansichtsbild des Objekts zu rekonstruieren, wobei die Ansichten jeweils den Unterbildern entsprechen, wobei das Anordnen gemäß einem Motiv durchführt wird, das aus einer Mehrzahl von Motiven ausgewählt wird,
   - Mittel (MGEI) zum Erzeugen der Mehrzahl von Elementarbildern (EI) anhand der Anordnung der K Unterbilder, um das Integralbild (InI) zu rekonstruieren,

wobei die Mittel zum adaptiven Dekomprimieren Folgendes umfassen:

   - Untermittel (DE) zum Decodieren von Restdaten, die auf die Mehrzahl von K Unterbildern bezogen sind, die zuvor codiert wurden, wobei die Restdaten in dem Datensignal enthalten sind,
   - Untermittel (PRD_DO) zum Vorhersagen, mithilfe der decodierten Restdaten, jedes der K aktuellen Unterbilder des aktuellen Mehrfachansichtsbilds in Abhängigkeit von jeweils K Referenzunterbildern eines Referenz-Mehrfachansichtsbilds, das zuvor decodiert wurde, wobei K vorhergesagte Unterbilder geliefert werden, wobei die Untermittel zum Vorhersagen zur Vorhersage ferner Folgendes nutzen:

      • entweder den Wert eines Bewegungsvektors, der anhand eines Werts ($\Delta Z$) der Tiefe berechnet wird, um die sich das Objekt in der Szene bewegt hat, wenn ein derartiger Wert in dem Datensignal enthalten ist,
      • oder einen Einzelwert eines Bewegungsvektors, der beim Codieren berechnet wird, wobei der Vektor die Bewegung zwischen einem der K zu rekonstruierenden Unterbilder und einem der K zuvor decodierten Referenzunterbilder beschreibt, wenn ein derartiger Wert in dem Datensignal enthalten ist,
      • oder K Werte von Bewegungsvektoren, die beim Codieren berechnet werden, wobei die K Bewegungsvektoren die Bewegung zwischen K zu rekonstruierenden Unterbildern und jeweils K zuvor decodierten Referenzunterbildern beschreiben, wenn derartige K Werte in dem Datensignal enthalten sind.

**9.** Vorrichtung zur Decodierung nach Anspruch 8, wobei in dem Fall, dass das Datensignal K Werte von Bewegungsvektoren enthält, die durchgeführte Decodierung vom MVC-Typ ist.

**10.** Informationsträger, der von einem Prozessor gelesen werden kann, auf dem ein Computerprogramm gespeichert ist, umfassend Anweisungen, die bei Ausführung durch einen Computer diesen dazu veranlassen, das Verfahren zur Decodierung nach einem der Ansprüche 6 bis 7 durchzuführen.

## Claims

**1.** Method for coding at least one current integral image (InI) representative of at least one object (OBJ) in perspective in a scene and comprising a plurality of elementary images (EI), said method implementing a step of generation of a plurality of K sub-images (SI1, SI2, ..., SIK) from said plurality of elementary images, said method being **characterized in that** it implements the steps of:

   - arranging (C3) said sub-images so as to construct a multi-view image of said object, said views corresponding respectively to said sub-images, said arrangement being effected according to a pattern selected from among a plurality of patterns,
   - adaptive compression (C4) of said constructed multi-view image, as a function of the type of movement of the object in the scene, said adaptive compression step implementing, for a current multi-view image, the sub-steps of:

      - calculation (C42) of K motion vectors describing the motion between said K current sub-images and respectively K reference sub-images (SIref) of a reference multi-view image previously coded then decoded,
      - calculation of the value ($\Delta Z$) of the depth by which said object has moved in the scene, if the motion vector calculated relative to the current sub-image which is situated at the centre of the current multi-view image has a zero value,
      - prediction (C44), using said K motion vectors, of each of the K current sub-images of said current multi-view image as a function respectively of said reference sub-images (SIref) of said reference multi-view image previously coded then decoded, delivering K predicted sub-images,
      - determination (C45) of residual data, by comparison of data relating to each of the K current sub-images and, respectively, to each of said K predicted sub-images,

said coding method also implementing:

- either the transmission (C5) of a data signal comprising at least said determined residual data and said calculated depth value ($\Delta Z$), if the motion vector calculated relative to the current sub-image which is situated at the centre of the current multi-view image has a zero value,
- or the transmission (C5) of a data signal comprising at least said determined residual data and a single value of one of the K calculated motion vectors, if the K calculated motion vectors have equal values,
- or the transmission (C5) of a data signal comprising at least said determined residual data and the respective values of the K calculated motion vectors, if at least two of the K calculated motion vectors have different values.

2. Coding method according to Claim 1, during which the coding is of MVC type, in the case where at least two of the K calculated motion vectors have different values.

3. Device for coding at least one current integral image (InI) representative of at least one object in perspective in a scene and comprising a plurality of elementary images (EI), said device comprising means (GSI) for generating a plurality of K sub-images (SI) from said plurality of elementary images, said device being **characterized in that** it comprises:

- means (ASI CO) for arranging said sub-images so as to construct a multi-view image of said object, said views corresponding respectively to said sub-images, said arrangement being effected according to a pattern selected from among a plurality of patterns;
- means (CMP) for adaptive compression of said constructed multi-view image as a function of the type of movement of the object in the scene, said means comprising, for a current multi-view image:

- sub-means (CAL1_CO) for calculating K motion vectors describing the motion between said K current sub-images and, respectively, K reference sub-images (SIref) of a reference multi-view image previously coded then decoded,
- sub-means (PRD_CO) for predicting, using said K motion vectors, each of the K current sub-images of said current multi-view image as a function respectively of said K reference sub-images (SIref) of said reference multi-view image previously coded then decoded, delivering K predicted sub-images,
- sub-means (CAL2_CO) for determining residual data, by comparison of data relating to each of the K current sub-images and, respectively, to each of said K predicted sub-images,
- sub-means (IC) for transmitting a data signal comprising at least said determined residual data, said transmission sub-means also transmitting:

• either a previously calculated value ($\Delta Z$) of the depth by which said object has moved in the scene, if the motion vector calculated relative to the current sub-image which is situated at the centre of the current multi-view image has a zero value,
• or a single value of one of the K calculated motion vectors, if the K calculated motion vectors have equal values,
• or the respective values of the K calculated motion vectors, if at least two of the K calculated motion vectors have different values.

4. Coding device according to Claim 3, in which the coding effected is of MVC type, in the case where at least two of the K calculated motion vectors have different values.

5. Information medium that can be read by a processor on which is stored a computer program comprising instructions which, when they are executed by a computer, cause the latter to implement the coding method according to either one of Claims 1 and 2.

6. Method for decoding a data signal representative of at least one current integral image (InI) which has been previously coded, said integral image being representative of at least one object in perspective in a scene and comprising a plurality of elementary images (EI), said method being **characterized in that** it implements the steps of:

- adaptive decompression (D1) of a previously coded current multi-view image, as a function of the type of movement of the object in the scene, as contained in said data signal,
- arrangement (D2) of a plurality of K current sub-images of said current multi-view image, so as to reconstruct the multi-view image of said object, said views corresponding respectively to said sub-images, said arrangement being effected according to a pattern selected from among a plurality of patterns,
- generation (D3) of said plurality of elementary images (EI) from the arrangement of said K sub-images, so as to reconstruct said integral image (InI) ,
- the adaptive decompression step implementing, for a current integral image to be reconstructed, the sub-steps of:

> • decoding (D11) of residual data which relate to said plurality of K sub-images of the previously coded multi-view image, said residual data being contained in said data signal,

- if the data signal contains a value ($\Delta Z$) of the depth by which said object has moved in the scene;

> • calculation (D13a) of a motion vector corresponding to said movement,
> • prediction (D14), using said decoded residual data and said calculated motion vector, of each of the K current sub-images of said current multi-view image as a function, respectively, of K reference sub-images of a previously decoded reference multi-view image, delivering K predicted sub-images,

- if the data signal contains a single motion vector value calculated in the coding, said vector describing the motion between one of the K sub-images to be reconstructed and one of the K previously decoded reference sub-images, prediction (D14), using said decoded residual data and said calculated motion vector, of each of the K current sub-images of said current multi-view image as a function, respectively, of K reference sub-images of a previously decoded reference multi-view image, delivering K predicted sub-images,
- if the data signal contains K motion vector values calculated in the coding, said K motion vectors describing the motion between K sub-images to be reconstructed and, respectively, K previously decoded reference sub-images, prediction (D14), using said decoded residual data and said K motion vector values, of each of the K current sub-images of said current multi-view image as a function, respectively, of K reference sub-images of a previously decoded reference multi-view image, delivering K predicted sub-images.

**7.** Decoding method according to Claim 6, during which, in the case where the data signal contains K motion vector values, the decoding is of MVC type.

**8.** Device (DO) for decoding the data signal representative of at least one current integral image (InI) which has been previously coded, said integral image being representative of at least one object in perspective in a scene and comprising a plurality of elementary images (EI), said device being **characterized in that** it comprises:

> - means (DCMP) for adaptive decompression of a previously coded current multi-view image, as a function of the type of movement of the object in the scene, as contained in said signal,
> - means (ASI_DO) for arranging a plurality of K current sub-images of said current multi-view image, to reconstruct the multi-view image of said object, said views corresponding, respectively, to said sub-images, said arrangement being effected according to a pattern selected from among a plurality of patterns,
> - means (MGEI) for generating said plurality of elementary images (EI) from the arrangement of said K sub-images, to reconstruct said integral image (InI),

in which said adaptive decompression means comprise:

> - sub-means (DE) for decoding residual data which relate to said plurality of K previously coded sub-images, said residual data being contained in said data signal,
> - sub-means (PRD_DO) for predicting, using said decoded residual data, each of the K current sub-images of said current multi-view image as a function, respectively, of K reference sub-images of a previously decoded reference multi-view image, delivering K predicted sub-images, said prediction sub-means also using for the prediction:

> > • either the value of a motion vector calculated from a value ($\Delta Z$) of the depth by which said object has moved in the scene, if such a value is contained in said data signal,
> > • or a single motion vector value calculated in the coding, said vector describing the motion between one of the K sub-images to be reconstructed and one of the K previously decoded reference sub-images, if such a value is contained in said data signal,
> > • or K motion vector values calculated in the coding, said K motion vectors describing the motion between K sub-images to be reconstructed and, respectively, K previously decoded reference sub-images, if such K values are contained in said data signal.

**9.** Decoding device according to Claim 8, in which the decoding effected is of MVC type, in the case where the data signal contains K motion vector values.

10. Information medium that can be read by a processor, on which is stored a computer program comprising instructions which, when they are executed by a computer, cause the latter to implement the decoding method according to either one of Claims 6 and 7.

ACQUISITION IMAGE INTEGRALE InI — C1

GENERATION SS_IMAGES (SI) — C2

AGENCEMENT SS_IMAGES EN IMAGE MULTIVUES (MVV) — C3

C4

COMPRESSION ADAPTATIVE IMAGE MULTIVUES $MVV_n$

SEGMENTATION SS_IMAGES $SI1_n, SI2_n, ..., SIK_n$ — C41

CALCUL VECTEURS MVT $MV1_n, MV2_n, ..., MVK_n$ — C42

C43a —
$MVr_n = 0$
$MVi = \Delta Z x \tan\Theta i$

$MV1_n = MV2_n = ...$
$... = MVi_n$

$MV1_n$
$MV2_n$
$\vdots$
$MVK_n$
— C43c

C44 — PREDICTION $SI1_n, SI2_n, ..., SIK_n$

C43b

$SIp1_n, SIp2_n, ..., SIpK_n$

C45 — CALCUL RESIDUS $a1_n, a2_n, ..., aK_n$

ENCODAGE
$-\Delta Z$
$-$RESIDUS $a1_n, a2_n, ..., aK_n$

ENCODAGE
$-MVi$
$-$RESIDUS $a1_n, a2_n, ..., aK_n$

MVC — C46c

C46a

C46b

TRANSMISSION SG — C5

SG

# Fig. 1

20

InI

ACI    GSI         BD

MVV(SI1,SI2,...,SIK)

ASI_CO

CMP

SGM

CAL1_CO

PRD_CO

CAL2_CO

ENC

CO

IC

SG

**Fig. 2**

IE1    P1₁    SI1
       P2₁
       P3₁
       P4₁    SI2
IE2    P1₂
       P2₂
       P3₂
       P4₂    SI3
IE3    P1₃
       P2₃
       P3₃
InI    P4₃    SI4
IE4    P1₄
       P2₄
       P3₄
       P4₄    SI5
       P1₅
       P2₅
       P3₅
       P4₅

**Fig. 4**

**Fig. 3A**

**Fig. 3B**

**Fig. 5A**

**Fig. 5B**

**Fig. 5C**

**Fig. 5D**

**Fig. 6A**

**Fig. 6B**

Fig. 7A

Fig. 7B

Fig. 8

SG

D1

DECOMPRESSION ADAPTATIVE IMAGE MULTIVUES $MVV_n$

DECODAGE RESIDUS $a1_n, a2_n, ..., aK_n$ — D11

D12a → $\Delta Z$

D12b → $MVi_n = MVr_n$

$MV1_n$
$MV2_n$
⋮
$MVK_n$ ← D12c

D13a → CALCUL $MVi = \Delta Z \times \tan\theta i$

CALCUL $MV1_n = MV2_n = ... MVK_n = MVi_n$ — D13b

D14 → PREDICTION $SI1_n, SI2_n, ..., SIK_n$

$SIp1_n, SIp2_n, ..., SIpK_n$

D15 → DECOD. $SIp1_n, SIp2_n, ..., SIpK_n$

$SID1_n, SID2_n, ..., SIDK_n$

D2 → AGENCEMENT SS IMAGES DECODEES EN IMAGE MULTIVUES DECODEE (MVVD)

D3 → GENERATION IMAGES ELEMENTAIRES DECODEES

D4 → RECONSTRUCTION IMAGE INTEGRALE InI

# Fig. 9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **R. ZAHARIA ; A. AGGOUN ; M. MCCORMICK.** Adaptive 3D-DCT compression algorithm for continuous parallax 3D integral imaging. *Signal Processing: Image Communication,* 2002, vol. 17, 231-242

- Efficient compression of motion-compensated sub-images with KarhunenLoeve transform in three-dimensional integral imaging. **KANG H H et al.** OPTICS COMMUNICATIONS. NORTH-HOLLAND PUBLISHING CO, 15 Mars 2010, vol. 283, 920-928